Europäisches Patentamt

European Patent Office

Office européen des brevets

Publication number: **0 367 685**

**A2**

# EUROPEAN PATENT APPLICATION

Application number: 89420392.6

Int. Cl.⁵ **G11B 11/10**

Date of filing: 16.10.89

Priority: 31.10.88 US 264759

Date of publication of application:
09.05.90 Bulletin 90/19

Designated Contracting States:
DE FR GB NL

Applicant: **EASTMAN KODAK COMPANY**
**343 State Street**
**Rochester, New York 14650(US)**

Inventor: **Shin, Sung-Chul Eastman Kodak Co.**
**Patent Department, 343 State Street**
**Rochester, New York 14650(US)**
Inventor: **Stinson, Douglas G. Eastman Kodak**
**Co.**
**Patent Department 343 State Street**
**Rochester, New York 14650(US)**

Representative: **Parent, Yves et al**
**Kodak-Pathé Département Brevets et**
**Licences Centre de Recherches et de**
**Technologie Zone Industrielle**
**F-71102 Chalon-sur-Saône Cédex(FR)**

Magnetooptical recording element.

A magnetooptical recording cement comprising alternating layers of cobalt and palladium, the cobalt layers each being about one atom thick and the palladium layers having a thickness of at least about 6 Angstroms. In a preferred embodiment, the total thickness of all the alternating layers is from about 110 Angstroms to about 270 Angstroms.

FIG. I

# MAGNETOOPTICAL RECORDING ELEMENT

This invention relates to magnetooptical recording elements and to a method of preparing the same. More particularly it relates to a magnetooptical recording element made up of alternating layers of cobalt and palladium.

In magnetooptical recording, information in the form of magnetic domains is written on a magnetooptical recording layer having perpendicular magnetic anisotropy. This information is read by irradiating the medium with a linearly polarized laser beam and detecting the change of the incident laser beam caused by the interaction of the light with the magnetization. Therefore, the amount of the change, called the polar magnetooptical effect, is one of the critical parameters to be concerned with to achieve high performance magnetooptical recording.

Magnetooptical recording is desirable because it is capable of high density information storage, while also having capability of being erased. Currently, rare-earth, transition-metal alloy films are favored as the recording media in magnetooptical recording elements. A typical medium of this type is disclosed in U.S. Patent No. 4,670,353 issued June 2, 1987. An inherent disadvantage of such materials is that they are highly subject to corrosion and therefore must be protected from oxygen containing atmospheres both during the preparation thereof and subsequently while in use.

This invention provides a magnetooptical recording element having an enhanced carrier-to-noise ratio (CNR), the element comprising a substrate having disposed thereon a magnetooptical media layer having a plurality of alternating cobalt and palladium layers, the cobalt layers each being about one cobalt atom thick (substantially a monoatomic layer) and the palladium layers each having a thickness of at least about 6 Angstroms. In a preferred embodiment, the total thickness of the plurality of layers is from about 110 Angstroms to about 270 Angstroms.

Figure 1 is a graph showing the figure of merit, reflectivity, and Kerr rotation angle verses the thickness of film and number of bi-Layers of a magnetooptical media in accordance with this invention; and

Figure 2 is a schematic representation of a vacuum chamber used in the examples for sequential deposition of films of this invention on a substrate.

The magnetooptical element in accordance with this invention include a magnetooptical media layer on a substrate, wherein the magnetooptical layer is made up of sequentially deposited cobalt and palladium layers wherein the cobalt layers are each about one cobalt atom thick and each of the palladium layers have a thickness of at least about 6 Angstroms and preferably from about 6 to about 15 Angstroms and most preferably from about 8.5 to about 13.5 Angstroms. In a preferred embodiment, the total thickness of the magnetooptical media which comprises the plurality of alternating cobalt and palladium layers is from about 110 to 270 Angstroms. Within these parameters, it has been found that the carrier-to-noise ratio (CNR) is maximized. The CNR from a magnetooptical recording system is generally limited by shot noise in the photodetectors. In this case, in accordance with this invention, the CNR is proportional to the figure-of-merit, which is defined by the product of the reflectivity (R) and the square of the Kerr rotation angle ($\Theta_k^2$). Thus, figure of merit is represented by the formula $R\Theta_k^2$.

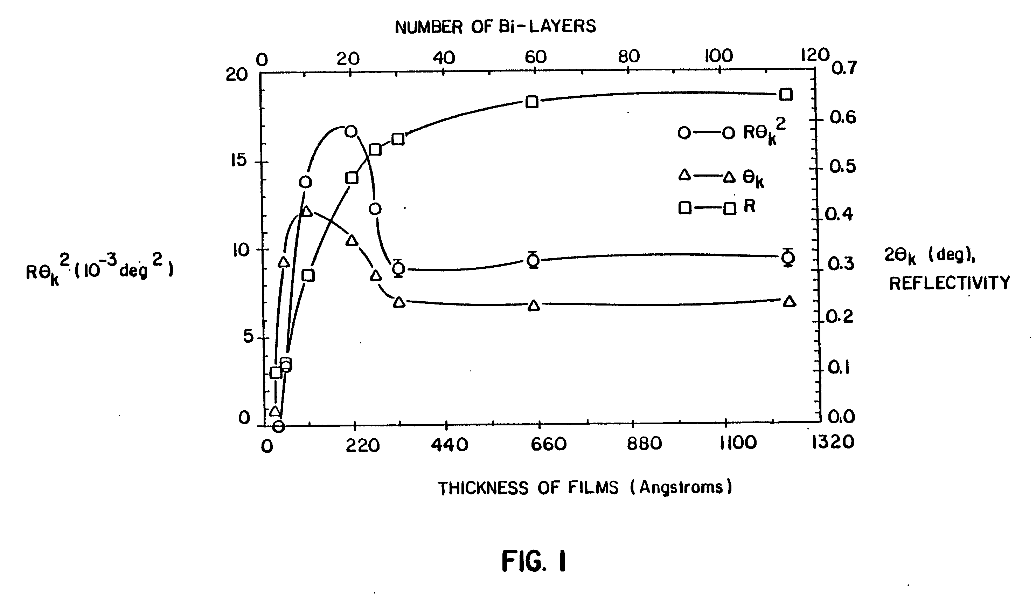

With regard to this preferred embodiment, Figure 1 is a curve showing the relationship between the figure of merit, reflectivity, and the Kerr rotation angle verses the number of bi-layers and the total thickness of the magnetooptical media, wherein the thickness of each of the cobalt layers is about 2 Angstroms and the thickness of each of the palladium layers is about 9 Angstroms. With regard to the Kerr rotation angle and the figure of merit, it can be seen from this Figure that each passes through a maximum thereby establishing the preferred range cited above.

In the preparation of the magnetooptical element in accordance with this invention, any suitable substrate which should be substantially inert to deposition conditions and non-magnetic, or so weakly magnetic as not to diminish the magnetic properties of the magnetic film to be formed thereon, may be employed. This size and shape of The substrate is not critical and can be flexible or rigid depending upon its application. The substrate can be in the form of a disk, tape, foil, wire or the like made of any suitable material such as glass, plastic, including for example acrylic resins, such as polymethylmethacrylate, polycarbonate, polyester, polyamide resins and the like. Non-magnetic metals such as for example aluminum and copper may be employed, however, where the magnetooptical element is to be addressed by the laser through the substrate, the substrate must be transparent. Non-transparent substrates may be employed only where the laser will address the magnetooptical media directly.

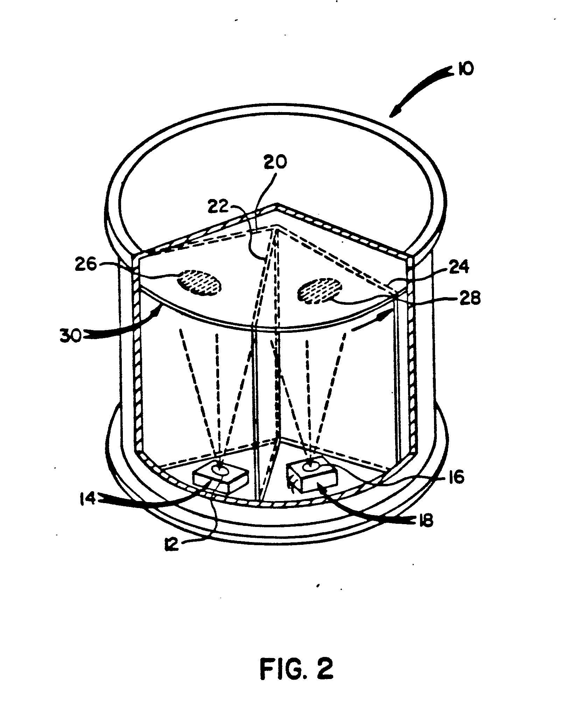

Any suitable method of preparing the magnetooptical element in accordance with this invention may be employed by including deposition of cobalt and palladium sequentially by any suitable technique such as thermal evaporation, sputtering or the like. A preferred method of preparing the magnetooptical elements in accordance with this invention is by utilizing an apparatus depicted in Figure 2. This Figure includes a vacuum chamber 10 which is 18 inches in diameter and 36 inches high. Disposed within the vacuum chamber is a rotating substrate table 30 which is driven by a conventional motor (not shown) so that the rotational speed of the table 30 may be varied by means of a motor control (not shown). Suitable substrates 26 and 28 for receipt of the magnetooptical media are disposed on the undersurface of rotating substrate table 30. The volume within the cylindrical vacuum chamber 10 is divided into at least two segmented sections by means of stainless steel plates 20, 22 and 24. One of the segmented section formed by plates 20 and 22 contains a crucible 14 containing one of the elements 12 required for the preparation of the magnetooptical media, while the other segmented section formed by stainless steel plate 22 and 24 contains a crucible carrying the other elemental material 16 for the preparation of the magnetooptical media.

In operation, the rotating table 30 is rotated at a speed suitable for depositing the layers of cobalt and palladinum at the required thickness. This thickness also is controlled by the power of the electron beam (not shown), impinging on the elemental materials 12 and 16 contained in crucibles 14 and 18, respectively. As the rotating table 30 turns, sequential deposition on the substrates 26 and 28 is achieved above the two sources so that the substrates are exposed alternately to the evaporated fluxes from the two sources 12 and 16, respectively. The deposition rates from the two sources are monitored by corresponding quartz crystal sensors (not shown).

The invention will be further illustrated by the following examples:

## Example 1

A multilayered cobalt palladium film is prepared on a glass substrate by electron-beam evaporation of elementary cobalt and elementary palladium in the vacuum chamber depicted in Figure 2 and hereinbefore described. The elementary cobalt is contained by crucible 14 and is shown in the drawing as reference character 12. The elementary palladium is contained within the crucible 18 and is shown as reference character 16. A vacuum of 5 times $10^{-6}$ Torr is maintained during deposition. Cross-contamination of the evaporated fluxes from each of the sources 12 and 16, respectively is prevented by stainless steel plates 20, 22 and 24. The substrate 30 is rotated at a speed of 9 revolutions per minute and the deposition rates of cobalt and palladium are controlled at about 0.9 Angstroms per second and about 4.1 Angstroms per second, respectively, by controlling the power to the electron-beam guns at 10KV 0.7 amp. for cobalt and 10KV 0.3 amp. for palladium. The deposition rates of the two sources are monitored by corresponding quartz crystal sensors. Each bilayer is composed of two Angstroms thick cobalt layer and a nine Angstroms thick palladium layer. The total number of bi-layers is 114. The composition of the film is 24 atomic percent cobalt and 76 atomic percent palladium. The Kerr rotation angle and optical hysteresis loop of the film are measured using a 780 nm-laser in an optical detection system. When the Kerr hysteresis loop of the multi-layered cobalt/palladium film is compared with the hysteresis loop of an alloyed cobalt/palladium film having a similar composition, a dramatic difference is clearly seen. The alloyed film does not develop any Kerr angle at zero applied magnetic field, while the multi-layered film provides the Kerr angle of almost 0.4°. Further, the squareness in the Kerr hysteresis loop of the multi-layered sample implies perpendicular magnetic anisotropy. Magnetic characterizations of the multi-layered film made in accordance with the invention, utilizing a vibrating sample magnetometer and a torque magnetometer indicate that the easy axis of the film is perpendicular to the film plane and the uniaxial intrinsic anisotropy energy and the saturation magnetization are estimated at 3.95 times $10^6$ ergs/cc and 307 emu/cc, respectively.

## Example 2

The procedure of Example 1 is repeated except that the deposition rate of palladium is increased to 6.1 Angstroms per second. This yielded a layered magnetooptical media wherein each bilayer is composed of 2 Angstrom thick cobalt layers and 13.5 Angstrom thick palladium layers. The total number of bi-layers is 83 and therefore the film has a similar total thickness as that of Example 1. A Kerr hysteresis loop of this sample is square and exhibits a Kerr rotation angle of 0.4°. The sample has perpendicular anisotropy and a saturation magnetism of 189 emu/cc and an intrinsic anisotropy energy of 2.39 times $10^6$ ergs/cc.

## Example 3

The procedure of Example 1 is repeated, however, the total number of bi-layers, N, is varied from 3 to 114 which corresponds to a total film thickness of from 33 Angstroms to 1318 Angstroms. A variation of the bi-layer thickness among the samples is within plus or minus 5 percent. The Kerr rotation angle of the films thus prepared is measured using a 780 nanometer laser in an optical detection system and the reflectivity is measured using a Beckman DK-2A spectrophotometer. The data thus developed is used to plot the curves indicated in Figure 1 which shows the dependence of the Kerr rotation ($2\Theta_k$), reflectivity (R), and figure of merits ($R\Theta_k2$) on the thickness of the film and number of bi-layers. From Figure 1, it is clearly seen that the figure of merit of the films having the film thicknesses between about 110 Angstroms and 270 Angstroms is much larger than the other thickness range and is therefore preferred. The maximum of figure of merits occurs at a film thickness of about 200 Angstroms in this system. Thus, in this area, the carrier-to-noise ratio is correspondingly increased. Not only is this an advantage from the point of view of the higher carrier-to-noise ratio but it is also of the advantage in that less materials are necessary to achieve these results and from a manufacturing point of view both time and materials are conserved.

## Claims

1. A magnetooptical recording element including a substrate having disposed thereon a magnetooptical media layer characterized in that the mangetooptical media layer is a plurality of alternating cobalt and palladium layers, said cobalt layers each being about one atom thick and said palladium layers each having a thickness of at least about 6 Angstroms.

2. The element of claim 1 characterized in that the palladium layers each have a thickness of from about 6 to about 15 Angstroms.

3. The element of claim 1 characterized in that the palladium layers each have a thickness of from about 8.5 to about 13.5 Angstroms.

4. The element of claim 1 characterized in that the thermo-magnetooptical media has a Kerr rotation angle of at least 0.35°.

5. The element of claim 1 characterized in that the total thickness of the magnetooptical media layer is from about 110 Angstroms to about 270 Angstroms.

6. A method of preparing a magnetooptical recording element characterized in that a plurality of alternating cobalt and palladium layers are sequentially deposited on a substrate, said cobalt layers each being about one atom thick and said palladium layers each having a thickness of at least about 6 Angstroms.

7. The method of claim 6 characterized in that the palladium layers each have a thickness of from about 6 to about 15 Angstroms.

8. The method of claim 6 characterized in that the palladium layers each have a thickness of from about 8.5 to about 13.5 Angstroms.

9. The method of claim 6 characterized in that the cobalt layers and palladium layers are sequentially deposited until the total thickness of all cobalt layers and palladium layers is from about 110 Angstroms to about 270 Angstroms.

NUMBER OF Bi-LAYERS

$R\Theta_k^2 (10^{-3} deg^2)$

$2\Theta_k$ (deg), REFLECTIVITY

○——○ $R\Theta_k^2$

△——△ $\Theta_k$

□——□ R

THICKNESS OF FILMS (Angstroms)

FIG. I

EP 0 367 685 A2

FIG. 2